# EUROPEAN PATENT SPECIFICATION

(11) **EP 0 397 904 B1**
(45) Date of publication and mention of the grant of the patent: **27.07.1994**
(21) Application number: 89108990.6
(22) Date of filing: 19.05.1989
(51) Int. Cl.: G06F 15/72, G06F 15/60

(54) **Method for generating graphical models and computer aided design system**
Verfahren zur Erzeugung von graphischen Modellen und rechnergestütztes Entwurfssystem
Méthode pour générer des modèles graphiques et système de conception assisté par ordinateur

(43) Date of publication of application: 22.11.1990
(73) Proprietor: Hewlett-Packard GmbH, D-71004 Böblingen (DE)
(72) Inventor: Roller, Dieter, Prof. Dr., W-7036 Schönaich (DE)

(56) References cited:
- WO-A-88/03290
- AUTOCAD RELEASE 10, REFERENCE MANUAL, September 1988, pages 121-124, A. Wheaton& Co. Ltd, Exeter, GB
- COMPUTER GRAPHICS'81, 1981, pages 281-292; U. WEISSFLOG: "Graphic interactiveappliction monitor (GIAM)"
- MACHINE DESIGN, vol. 59, no. 6, 26th March 1987, page 56, Cleveland, Ohio, US;"Touchpad increases CAD output"

## Description

This invention relates to a method for generating graphical models of 2- or 3-dimensional objects with at least partially variable dimensions, in particular mechanical parts, in a computer-aided design system, comprising a set of design commands.

This invention further relates to computer-aided design system, comprising at least one user input interface, preferably a keyboard and/or a graphics tablet, further comprising at least one user output interface, preferably a screen with graphics capabilities and/or a plotter, and further comprising a digital processor being connected with said user input interface and said user output interface, and with a program memory containing instructions to operate said digital processor, wherein said user input interface comprises a set of design command entry means, preferably keys of said graphics tablet.

A method and a system of the aforementioned kind are described in European patent application EP-A-346 517 which is prior art in view of Article 54 (3) EPC.

The aforementioned European patent application EP-A-346 517 of the same applicant discloses various details of computer-aided design methods and systems, and the disclosure of that application is herewith incorporated into the present application by reference.

A computer-aided design system is used to build graphical models and graphical drawings of mechanical parts in an interactive mode, i.e. to enter a geometry and its dimensions by well-known input means such as keyboards, graphics tablets, mouses etc., to show these parts on a high-resolution CRT and finally to plot them. A common technique is to enter fixed values for the dimensions of a mechanical part to be drawn. Still this technique has the disadvantage that it is rather uncomfortable to alter the dimensions in a later stage of the design process.

One has, therefore, already tried to build CAD systems which allow to enter variable dimensions, i.e. to enter a symbolic value or label for certain dimensions
during the design process and to replace it - in a second step - by an actual dimension in order to create the actual part.

CAD systems which allow the input of symbolic dimensions are particularly important for the creation of part families, i.e. of parts with principally the same shape, but differing dimensions. They are further used for the design of parts, the dimensions of which are not yet finally defined.

Above-mentioned European patent application EP-A-346 517 discusses various prior art methods and systems, e.g. the method of variant programming, the interactive variant design with sequential calculation of the geometrical points of a variant and the interactive variant design with simultaneous calculation of the geometrical points.

These prior art techniques are, e.g., described in "HP-DESIGN, HP 7 98355A, Technical Description, November 1984", in the book of Light, R. and Gossard, D.: MODIFICATION OF GEOMETRIC MODELS THROUGH VARIATIONAL GEOMETRY, Computer Aided Design, Volume 14, July 4, 1982, Butterworth & Co. Ltd., and, further, in a Master Thesis of Chyz, G.W. "CONSTRAINT MANAGEMENT FOR CONSTRUCTIVE GEOMETRY", Department of Mechanical Engineering, MIT, 1985". Further prior art computer-aided design methods and systems are described in an article of Gossard, D.C., R.P. Zuffante and H. Sakurai, entitled "REPRESENTING DIMENSIONS, TOLERANCES, AND FEATURES IN MCAE SYSTEMS", published in US-Z-IEEE Computer Graphics and Applications, March 1988.

Considering the disclosure of European patent application EP-A-346 517, one can conclude that the problem of interactive design with dimensional parameters is adequately solved.

However, recent progress in design methodologies for CAD systems brought a new aspect to the problem of parametric design. More precisely, there is a need for future CAD systems supporting the design process with high-level form features such as hole patterns, hinges, complex through holes, etc., as opposed to simple geometric primitives like points, lines, surfaces and elementary bodies. A survey on this high-level form feature design is given in a report of J. Shah, entitled "CURRENT STATUS OF FEATURES TECHNOLOGY", Report No. R-88-GM-04. 1, CAD-I Computer-Aided Manufacturing International, Arlington, TX, 1988.

It has been known in the art to use so-called replication commands. Upon execution of such a replication command, a replication operation was performed, e.g. a certain object or geometric shape was duplicated in longitudinal direction or in rotational manner. Of course, it was also possible to create more than a duplication, e.g. to repeat the object four or five times.

Such replication commands are described in "AUTOCAD Release 10 Reference Manual, September 1988", pages 121 to 124, and in PCT publication WO 88/03290, pages 43 and 58.

However, such known replication commands had the effect that the replication was immediately executed. That is, when an actual variant was generated, the dimensions of the replicated objects could still be altered, but not the topology of the whole construction. In other words, the number of replications to be performed and their relation to each other was "frozen".

It is therefore an object of the present invention to make the known CAD systems more intelligent with respect to the support of design decisions, particularly by providing an interactive generation of parametric designs with structural parameters in addition to dimensional parameters.

According to the method, explained at the outset, this object is achieved by the steps of
- selecting a subset of geometric elements or of design commands therefore corresponding to a structural element of said model;
- inputting a replication command in a variable first mode in which the number of replications to be performed and/or their locations are defined as variables;
- replicating said design commands in a second mode to generate a model being provided with a plurality of said replicated structural elements wherein said variables are replaced by actual values.

According to the system, explained at the outset, this object is achieved in that
- said set of design command entry means are logically divided into at least two sub-groups
   -- in the first sub-group each command being associated with a primary design feature;
   -- in the second sub-group each command being associated with a replication feature;
- said program memory contains instructions
   -- to select a sub-group of geometric elements or of design commands therefor corresponding to a structural element of said model;
   -- to replicate said geometric elements or said design commands therefor in a variable first mode, in which the number of replications to be performed and/or their locations are defined as variables; and
   -- to generate in a second mode a model being provided with a predetermined plurality of said replicated structural elements.

The fact that the replications may also be generated in a variable mode - so that the number of replications as well as their position parameters may vary from variant to variant - provides a tremendous effectivity increase in interactive design with CAD systems since significantly more particular designs can be generated automatically out of a generic design.

An example how uncomfortable it was for the user to generate a design with a variable number of replications is given in "Computer Graphics 1981", page 290. The "macro example" shown there depicts that the user had to learn and to apply a programming language for this purpose. This was not only a very costly and time-consuming process, but mechanical engineers often also refused to learn a specific programming language simply for the purpose of generating a drawing.

While keeping the entry of variable replication commands, a preferred feature of the inventive method is to offer also replication commands that may alternatively be input in a fixed mode in which the number of replications to be performed and/or their locations are fixed. This gives full flexibility to the method as the user may, depending on his needs, select either a fixed replication or a variable replication.

In a preferred embodiment of the method according to the invention, said replication command comprises a rotation command for arranging said plurality of structural elements in a rotational distribution about a predetermined center point in predetermined angular steps.

These features have the advantage that rotational parts like wheels, etc. may be easily modified in an interactive manner by increasing the number of e.g. eccentric gaps, mounting holes, etc. by just distributing a predetermined plurality of the aforementioned elements about an inner or outer periphery of the wheel without the necessity of entirely redesigning any of these variants.

In another similar embodiment of the method according to the invention, said replication command comprises a shift command for arranging the plurality of structural elements in a linear distribution along a predetermined axis in predetermined spacings. Preferably, said axis is a horizontal or vertical axis.

Again, these features offer the advantage to easily modify a model having larger dimensions either in a horizontal or vertical direction by increasing the number of e.g. through-holes or gaps, possibly according to certain design rules in an automatic way.

Still according to another similar preferred embodiment of the invention, said replication command comprises a scaling command for arranging said plurality of structural elements in a predetermined distribution at predetermined locations in predetermined scalings.

These features, too, offer the advantage of easily modifying a given model by distributing the aforementioned structural elements in different scalings at any conceivable locations.

Seen as a whole, the method and the system according to the invention offer substantial advantages to the user by saving time for complex construction objects. This stems from the inventive principle of interactive generation of a generic design with unlimited (variable) numbers of structural elements as well as variable positions of such elements.

In a given example of a wheel with a predetermined number of gaps, as will be described below in connection with the drawings, a comparison was made with prior art techniques. In order to program the aforementioned example in a high-level language, a medium-experienced user typically would need about 4 hours. With an interactive dimension-driven CAD system based on prior art technology, this example cannot be carried out at all, because the maximum number of eccentric holes that might appear in practice later on is not known at the time of doing the master design. However, assuming as an example the maximum number of holes to be 36, the 36 eccentric holes would have to be designed explicitly with distinguished dimension variables. This then would allow to set paramaters to zero for an arbitrary number of the designed eccentric gaps and, thus, produce variants with different numbers of gaps. The design time in this case, in spite of the limited flexibility of the number of gaps - still is about 3 hours. With the method and the system according to this invention, the complete design takes only about 10 minutes. As can be seen, the method and the system according to the invention can boost-up the efficiency of a parametric design system by orders of magnitudes and, thus, save enormous costs in the design phase.

It goes without saying that all of the features, discussed hereinbefore or hereinafter, may not only be used in the particular combination as described but, also, in other combinations, or alone without leaving the scope of the present invention.

The accompanying drawings depict preferred embodiments of the present invention. In particular, further features and advantages of the invention may be apparent in this detailed description. In the drawings,
Figs. 1 to 3 illustrate how dimensional changes relate to the topological structure in prior art systems;
Figs. 4 to 6 illustrate various examples of structural design changes;
Fig. 7 shows a block diagram illustrating the architecture of a system according to the invention;
Fig. 8 shows a flow diagram for a replication design command;
Fig. 9 shows a design example of a wheel with eccentric gaps;
Figs. 10 and 11 show generic variants of the example of Fig. 9.

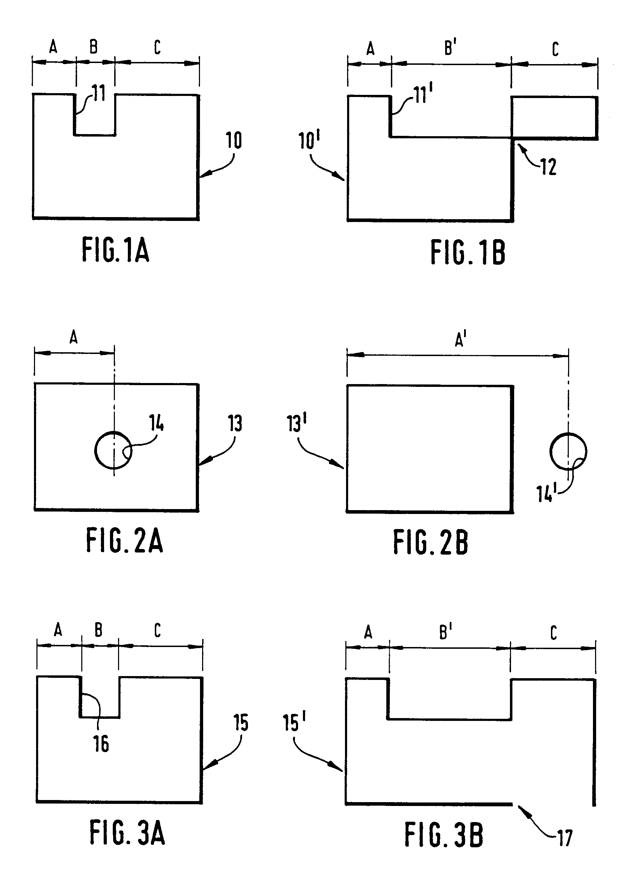

Fig. 1A shows a first planar design 10 of essentially rectangular shape with a gap 11 being arranged on the upper margin and having a rectangular shape, too. The respective dimensions are referred to as A, B, and C. If dimension B is now modified into B′ as depicted by modified planar design 10′ in Fig. 1B, the configuration may become unrealistic if B′ becomes equal 2 or greater than the sum of B and C, as can clearly be seen in Fig. 1B at 12.

Another example of topology consequences as a result of dimensional changes is depicted in Fig. 2A with a second planar design 13 of rectangular shape being provided with a circular hole 14 at a distance A from the left margin. If dimension A is modified in A′ as depicted in Fig. 2B by modified planar design 13′, then it may be that the hole 14′ is caused to be outside of design 13.

Turning now to Fig. 3, Fig. 3A shows a third planar design 15 with a gap 16 similar to gap 11 of Fig. 1A and with same dimensions A, B, and C.

If dimension B′ is modified as shown in Fig. 3B with modified planar design 15′, implicit constraints and dimensions are now in contradiction to topology, as shown at 17 in Fig. 3B, if the bottom line of third planar design 15 or 15′, respectively, is made of fixed length instead of interconnecting two given points.

Frequently, functional requirements for a design do not only determine the dimensions of a geometric design but also the structure of a design. In these cases, structural as well as dimensional parameters are needed to describe the design.

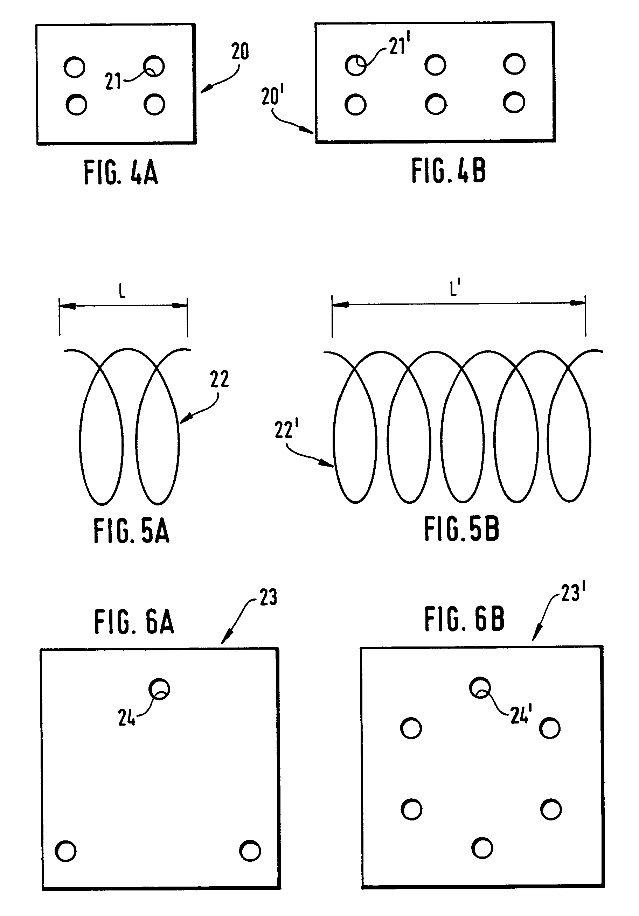

Fig. 4A and 4B show a first example of a fourth planar design 20 and 20′, respectively, where unmodified planar design 20 is provided with four holes 21, distributed along a quadrangle.

Modified planar design 20′ of Fig. 4B instead shows six holes 21′ as may be the case when through-holes in a plate (for fixture) depend on the size of the plate.

A second example is shown in Figs. 5A and 5B, respectively, with a spring 22 in Fig. 5A of length L being modified into spring 22′ of Fig. 5B with modified length L′, if the number of windings of the spring 22, 22′ depends on the specific load requirements.

A third example is shown in Figs. 6A and 6B, respectively, with a fifth planar design having a circular set of thread holes as is the case e.g. in a gear-box dependent on the fastening configuration in the assembly.

Whereas three circularly distributed holes 24 are used in planar design 23 of Fig. 6A, six such circularly distributed holes 24′ are used in modified planar design 23′ of Fig. 6B.

With prior art systems in the cases of Figs. 4 through 6, all particular designs either needed to be designed explicitly or a program had to be written by the user that captures the generic design and generates the particular design according to input parameters.

The employment of interactive dimension-driven CAD systems that only support the design with dimensional parameters is rather awkward and only possible in some special cases. It would require that the master model covers the most complex structural configuration. For the generation of variants, dimensions of unwanted structural elements will need to be set to zero. It is obvious that the explicit design of the most complex situation is rather time-consuming. However, an even bigger problem is the fact that often the maximum structure is not known up-front at all.

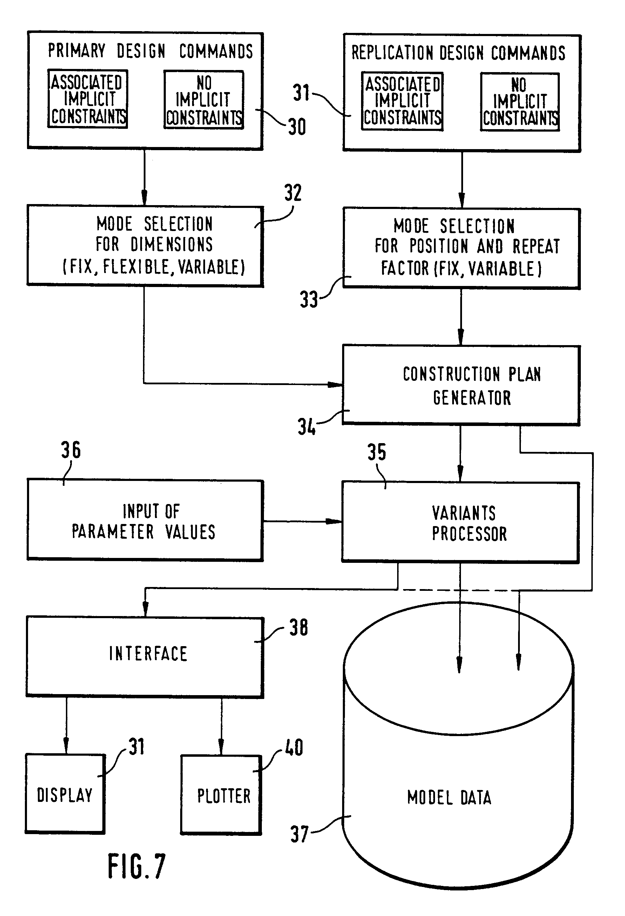

According to the present invention, a new method and system is used that supports the design of dimensional as well as structural variants in a graphically interactive manner. The architecture of a system based on this method is shown in Fig. 7.

The method and system according to the present invention employs two main sets of design commands. As identified in Fig. 7 by reference numerals 30 and 31, the invention employs primary design commands as well as replication design commands. Both commands may be inputted into a computer aided design system according to the present invention by means of an user input interface, e.g. a conventional keyboard and/or a graphics tablet. For the purpose of the present example, it may be assumed that it is a graphics tablet.

The graphics tablet comprises a set of keys which are used to enter design commands, i.e. by pressing an appropriate pen on predefined areas of the graphics tablet. Other keys may be used for further functions, e.g. HELP, PLOT, etc., as described in further detail in co-pending European patent application 88 109 628.3.

In the present invention, the primary design commands support the initial design of geometric elements. These commands are comparable to the design commands, as explained in further detail in co-pending European patent application 88 109 628.3. They can be divided into two sub-classes, one that relates implicit dimensional constraints (e.g. LINE_HORIZONTAL, LINE VERTICAL, LINE_PARALLEL, etc.) to the command, and another one that does not impose any implicit dimensional constraints by the use of a command (e.g. LINE_BETWEEN_TWO_POINTS). All of the commands in both sub-classes can be executed in the modes FIX, FLEXIBLE, or VARIABLE, as identified by reference numerals 32 and 33 in Fig. 7. In FIX mode, the command will generate a geometric element with fixed dimensions. The VARIABLE mode associates variables to the dimensions of the created elements. Variables with consecutive indices can be generated automatically at the time of performing a primary design command in VARIABLE mode. Eventually, the FLEXIBLE mode generates elements that fit between two existing points (as e.g. was not the case in the representation of Fig. 3B). In this case, the dimensions are determined implicitly.

The replication design commands, as represented by reference numeral 31 in Fig. 7, on the other hand, are used to design geometric elements or groups of elements that have multiple occurrences in the design. Examples of replication design comands are:
ROTATE: This command generates multiple copies of a set of selected geometric elements and places them in a circular configuration with specified angles and distances from a center point.
COPY_HORIZONTAL: This command generates multiple copies of a selected set of geometric and/or annotation elements with specified distances along a horizontal direction.
COPY_VERTICAL: In an analogous way this command generates multiple copies in a vertical direction. It goes, however, without saying that the direction of shifting multiple copies of the selected set of elements may also be other than 90 degrees or 0 degrees with respect to the horizontal or vertical axis, respectively.
SCALE: performs the generation of multiple scaled copies of selected geometric elements at specific locations.

The replication design commands can be executed either in a FIX mode or a VARIABLE mode, as can be seen at reference numeral 33 in Fig. 7 and similar to the primary design commands at 32 in Fig. 7. In the FIX mode, the number of replications that are being performed by the command are fixed as well as the positions for the generated replications. In VARIABLE mode, variables are generated and associated to the number of replications as well as to the position parameters. Of course, mixed modes could also be supported.

During a design session, all design commands used are sent as input to a construction plan generator 34. The construction plan generator 34 is a program that generates a generic design as an output. This generic design consists of a sequence of design commands where repeat factors and all geometric points are stored using variables. This also includes points of geometric elements that have been generated in FIX mode since FIX mode only imposes fixed dimensions to elements but not fixed locations.

From a generic design, variants can be generated through a variants processor 35 according to specific parameter values. The variants processor 35 essentially consists of routines that are already existing in conventional CAD systems. It replaces the variables by the actual values as inputted at 36 and performs a sequence of elementary design commands. The production of variants is very fast, because the construction plan includes the complete set of necessary operations in the proper sequence. In fact, the generation of a variant is done in about the time an infinitely fast user would need to input the design.

The entire set of data generated are now stored as model data 37 in Fig. 7 and are, in parallel, fed to an interface 38 for representing the generated design on a display 39, e.g. a graphic CRT or may be printed out on a conventional plotter 40.

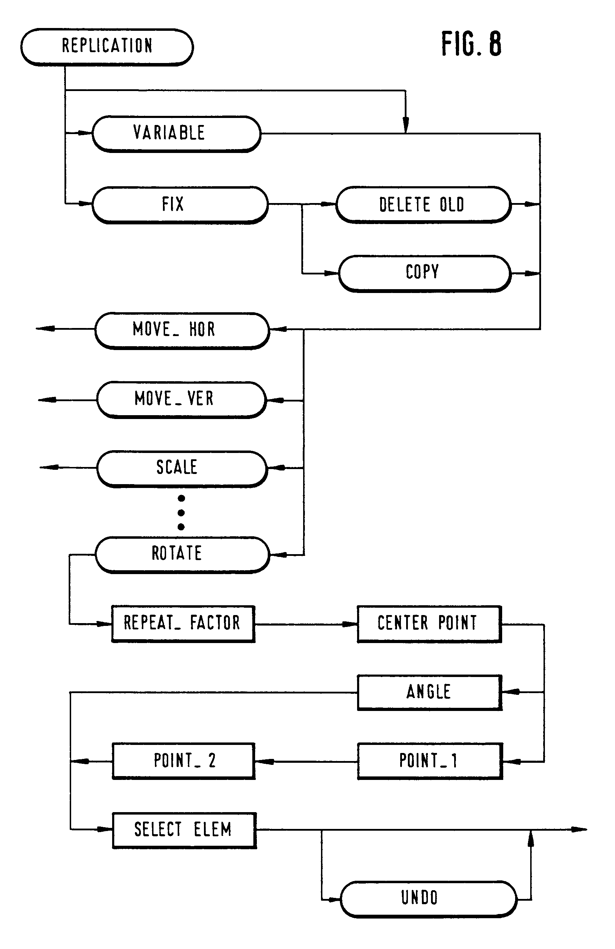

Fig. 8 is a simplified representation of a flow diagram for a replication design command on the example of ROTATE. After inputting the replication command which may comprise one or more replication functions, and selecting the VARIABLE or FIX mode, the various replication design functions may be selected like MOVE_HOR, MOVE_VER, SCALE, or inter alia, ROTATE. In the latter case, a REPEAT_FACTOR is to be selected representing the number of copies which are to be arranged about a common CENTER POINT, each at a predetermined ANGLE, the latter being also commands which are to be inputted in order to perform the ROTATE replication design command.

Of course, the selection of FIX or VARIABLE mode could be done also for each replication design command separately. Commands that perform similar operations to the above described replication design commands in FIX mode already exist in conventional CAD systems. However, they do not impose any implicit constraints to the created data and do not provide the possibility to change any parameters after being used. Therefore, they are of no use for interactive structural and dimensional parametric design. The similarity of existing commands for rigid design makes a parametric system based on the proposed method very easy to use and learn, particularly for users that are already familiar with a conventional CAD system.

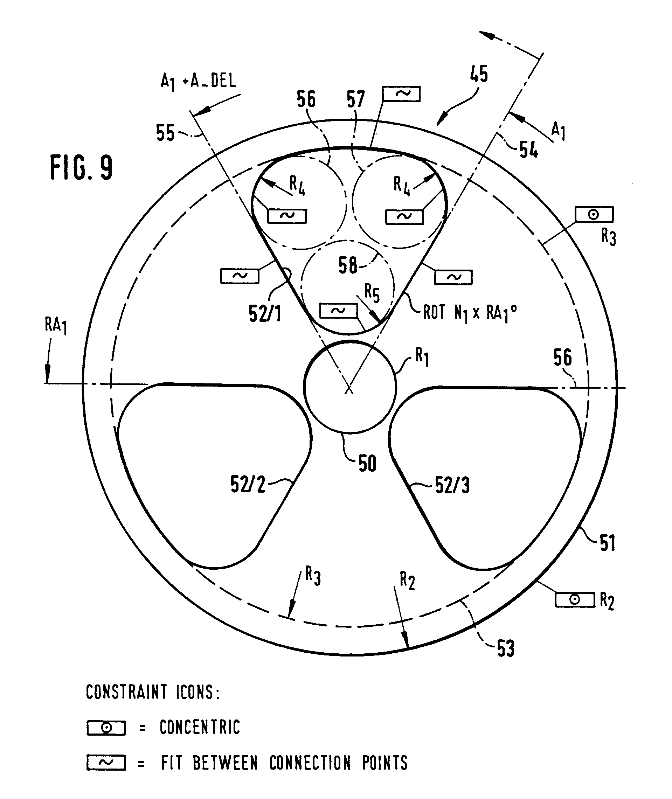

Fig. 9 shows an example to demonstrate the design according to the method and system of the present invention step by step on the example of a wheel 45.

First, a center hole 50 and an outer contour 51 of the wheel 45 are created using primary design commands in VARIABLE mode. The corresponding variable radii are R₁ and R₂.

In the next step, an eccentric gap 52/1 is designed in the wheel 45. The complete design will include an arbitrary number of such eccentric gaps 52, placed at locations with a given but variable offset to the center. However, one explicitly designs only the first gap 52/1 and then use the replication design command ROTATE to create a variable number of, say, two replications 52/2, 52/3 at locations defined by a location parameter.

As a preparation for the creation of the geometry elements for the first gap 52/1, one designs a construction circle 53 with radius R₃ concentric to the outer contour 51 with radius R₁.

Construction geometry elements are unbound lines and are created using primary design commands. They are shown as dotted lines in Fig. 9. Then, two straight construction lines 54, 55 with angles A₁ and A₁+A_DEL in respect to a horizontal plane 56.

Now, construction circles 56, 57, and 58 are drawn to support the variable fillet radii R₄ and R₅. These construction circles 56 through 58 are placed tangential to the before generated construction elements 53, 54, and 55. After the placement of the construction elements 53 through 58, and OVERDRAW command to draw the contour of the eccentric gap 52 based on the construction line of elements 53 through 58 is used. The lines created with the OVERDRAW command are determined by the intersection points of the construction lines of elements 53 through 58. Therefore, they are stored as flexible lines.

In the next step, the replication design command ROTATE is performed. In more detail, this command is performed with the following inputs (c.f. Fig. 8):
- REPLICATION
- VARIABLE
- ROTATE, repeat factor
- CENTER, fix point, angle
- SELECT, elements
The expressions in capital letters hereby denote command keystrokes, whereas the attributes attached and separated by commas are additional inputs, needed to specify the action. The value for the repeat factor variable has been choosen to be three in the generic design. As a result, we now have the design complete as it is shown in Fig. 9. The parameters that have been created during the above described interactive design session are:
- dimensional parameters: R₁, R₂, R₃, R₄, A₁, A_DEL
- structural parameters: N₁, RA₁
where N₁ is the number of replications (including the first generated design) and RA₁ is the angle of rotation between the first generated design and the second, copied design and, consecutively, any further copied design.

Fig. 9, further, shows interactive graphic elements, namely constraint icons for indicating constraints as e.g. indicating that outer contour 51 and construction circle 53 are concentric and that the contour of eccentric gaps 52 have to fit between connection points (of construction elements 53 through 58). These icons are placed automatically as a graphical feedback for the user about the imposed constraints.

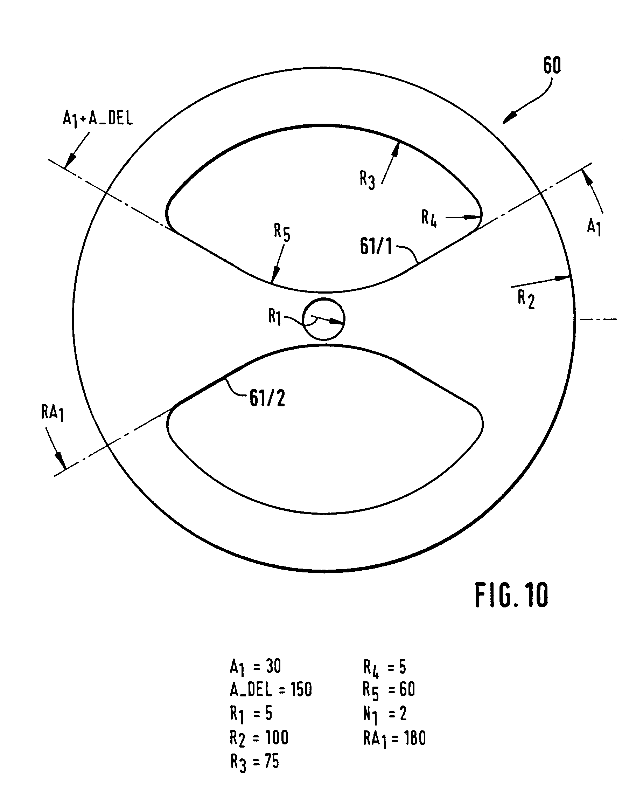

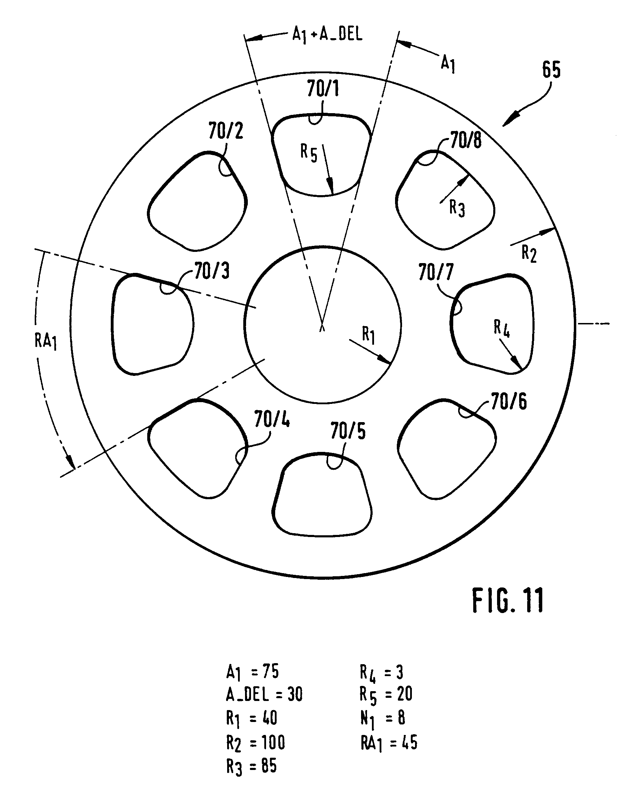

Figs. 10 and 11 show two variants of the design for given sets of parameters.

In Fig. 10, a wheel 60 is provided with two eccentric gaps 61/1 and 61/2, respectively, with the parameters specified on the right margin of Fig. 10.

In contrast, a wheel 65 is provided with eight eccentric gaps 70/1 through 70/8 with the dimensional and structural parameters as also specified on the right margin of Fig. 11.

It goes without saying that "geometric" or "geometric element" in the sense of this application comprises elementary geometric elements like dots, lines, circles, etc. as well as annotations like hatchings, alphanumeric symbols, words, surface quality symbols, etc.

## Claims

1. Method for generating graphical models of 2- or 3-dimensional objects with at least partially variable dimensions, in particular mechanical parts, in a computer-aided design system, comprising a set of design commands, characterized by the steps of:
1.1 selecting a subset of geometric elements or of design commands therefor corresponding to a structural element of said model;
1.2 inputting a replication command in a variable first mode in which the number of replications to be performed and/or their locations are defined as variables;
1.3 replicating the design commands in a second mode to generate a model being provided with a plurality of said replicated structural elements wherein said variables are replaced by actual values.

2. Method according to claim 1, characterized in that said replication command comprises a rotation command for arranging said plurality of structural elements in a rotational distribution about a predetermined center point in predetermined angular steps.

3. Method according to claims 1 or 2, characterized in that said replication command comprises a shift command for arranging said plurality of structural elements in a linear distribution along a predetermined axis in predetermined spacings.

4. Method according to claim 3, characterized in that said axis is a horizontal or a vertical axis.

5. Method according to claim 1, characterized in that said replication command comprises a scaling command for arranging said plurality of structural elements in a predetermined distribution at predetermined locations in predetermined scalings.

6. Computer-aided design system comprising:
6.1 at least one user input interface (30, 31), preferably a keyboard and/or a graphics tablet;
6.2 at least one user output interface, preferably a screen (31) with graphics capabilities and/or a plotter (40);
6.3 a digital processor (34, 35) being connected with said user input interface (30, 31) and said user output interface (39, 40) and with a program memory containing instructions to operate said digital processor (34, 35);
6.4 said user input interface (30, 31) comprising a set of design command entry means, preferably keys of said graphics tablet,
characterized in that
6.5 said set of design command entry means are logically divided into at least two sub-groups
6.5.1 in the first sub-group each command being associated with a primary design feature;
6.5.2 in the second sub-group each command being associated with a replication feature;
6.6 said program memory contains instructions
6.6.1 to select a sub-group of geometric elements or of design commands therefor corresponding to a structural element of said model;
6.6.2 to replicate said geometric elements or said design commands therefor in a variable first mode, in which the number of replications to be performed and/or their locations are defined as variables; and
6.6.3 to generate in a second mode model being provided with a predetermined plurality of said replicated structural elements wherein said variables are replaced by actual values.

## Patentansprüche

1. Verfahren zum Erzeugen graphischer Modelle von 2- oder 3-dimensionalen Gegenständen mit wenigstens teilweise variablen Maßen, insbesondere mechanischen Teilen, in einem rechnergestützten Entwurfssystem, das einen Satz von Entwurfsbefehlen umfaßt, gekennzeichnet durch folgende Schritte:
1.1 Das Auswählen eines Untersatzes von geometrischen Elementen oder von Entwurfsbefehlen hierfür, die einem strukturellen Element des genannten Modells entsprechen;
1.2 das Eingeben eines Replikationsbefehls in einer variablen ersten Betriebsart, in der die Zahl der durchzuführenden Replikationen und/oder ihre Orte als variable Größen definiert sind;
1.3 das Replizieren der Entwurfsbefehle in einer zweiten Betriebsart, um ein Modell zu erzeugen, das mit einer Mehrzahl der genannten replizierten strukturellen Elemente ausgestattet ist, wobei die genannten variablen Größen durch tatsächliche Größen ersetzt werden.

2. Verfahren nach Anspruch 1, dadurch gekennzeichnet, daß der genannte Replikationsbefehl einen Rotationsbefehl umfaßt, um die genannte Mehrzahl von strukturellen Elementen in einer Rotationsverteilung um einen vorbestimmten Mittelpunkt in vorbestimmten Winkelschritten anzuordnen.

3. Verfahren nach Anspruch 1 oder 2, dadurch gekennzeichnet, daß der genannte Replikationsbefehl einen Verschiebebefehl umfaßt, um die genannte Mehrzahl von strukturellen Elementen in einer linearen Verteilung entlang einer vorbestimmten Achse in vorbestimmten Abständen anzuordnen.

4. Verfahren nach Anspruch 3, dadurch gekennzeichnet, daß die genannte Achse eine horizontale oder vertikale Achse ist.

5. Verfahren nach Anspruch 1, dadurch gekennzeichnet, daß der genannte Replikationsbefehl einen Skalierbefehl umfaßt, um die genannte Mehrzahl von strukturellen Elementen in einer vorbestimmten Verteilung an vorbestimmten Orten in vorbestimmten Maßstäben anzuordnen.

6. Rechnergestütztes Entwurfssystem mit:
6.1 Wenigstens einer Benutzer-Eingabeschnittstelle (30, 31), vorzugsweise einer Tastatur und/oder einem Grafiktablett;
6.2 wenigstens einer Benutzer-Ausgabeschnittstelle, vorzugsweise einem Sichtschirm (31) mit graphischen Fähigkeiten und/oder einem Plotter (40);
6.3 einem digitalen Prozessor (34, 35), der mit der genannten Benutzer-Eingabeschnittstelle (30, 31) und der genannten Benutzer-Ausgabeschnittstelle (39,40) und mit einem Programmspeicher, der Instruktionen zum Betrieb des genannten digitalen Prozessors (34, 35) enthält, in Verbindung steht;
6.4 wobei die genannte Benutzer-Eingabeschnittstelle (30, 31) einen Satz von Entwurfsbefehl-Eingabemitteln umfaßt, vorzugsweise Tasten des genannten Grafiktabletts;
dadurch gekennzeichnet, daß
6.5 der genannte Satz von Entwurfsbefehl-Eingabemitteln logisch in wenigstens zwei Untergruppen aufgeteilt ist, wobei
6.5.1 in der ersten Untergruppe jeder Befehl einem hauptsächlichen Entwurfsmerkmal zugeordnet ist;
6.5.2 in der zweiten Untergruppe jeder Befehl einem Replikations-merkmal zugeordnet ist;
6.6 der genannte Programmspeicher Instruktionen enthält, um
6.6.1 eine Untergruppe von geometrischen Elementen oder von Entwurfsbefehlen hierfür, die einem strukturellen Element des genannten Modells entsprechen, auszuwählen;
6.6.2 die genannten geometrischen Elemente oder die Entwurfsbefehle hierfür in einer variablen ersten Betriebsart zu replizieren, in der die Zahl der durchzuführenden Replikationen und/oder ihre Orte als variable Größen definiert sind; und
6.6.3 in einer zweiten Betriebsart ein Modell zu erzeugen, das mit einer vorbestimmten Mehrzahl der genannten replizierten strukturellen Elemente ausgestattet ist, wobei die genannten variablen Größen durch tatsächliche Größen ersetzt werden.

## Revendications

1. Procédé de génération de modèles graphiques d'objets à deux ou trois dimensions à dimensions au moins partiellement variables, en particulier des pièces mécaniques, dans un système de conception assisté par ordinateur, comprenant un ensemble d'ordres de configuration, caractérisé par les étapes consistant à:
1.1 choisir un sous-ensemble d'éléments géométriques, ou d'ordres de configuration les concernant, correspondant à un élément structurel dudit modèle;
1.2 entrer un ordre de réplication dans un premier mode variable dans lequel le nombre de réplications à exécuter et/ou leurs emplacements sont définis comme variables;
1.3 répliquer les ordres de configuration dans un deuxième mode afin d'engendrer un modèle qui est pourvu d'une série d'éléments structurels répliqués dans lequel lesdites variables sont remplacées par des valeurs réelles.

2. Procédé selon la revendication 1, caractérisé en ce que ledit ordre de réplication comprend un ordre de rotation pour agencer ladite série d'éléments structurels en une répartition à rotation selon des étapes angulaires prédéterminées autour d'un point central prédéterminé.

3. Procédé selon la revendication 1 ou 2, caractérisé en ce que ledit ordre de réplication comprend un ordre de décalage pour agencer ladite série d'éléments structurels en une répartition linéaire selon des espacements prédéterminés le long d'un axe prédéterminé.

4. Procédé selon la revendication 3 caractérisé en ce que ledit axe est un axe horizontal ou un axe vertical.

5. Procédé selon la revendication 1, caractérisé en ce que ledit ordre de réplication comprend un ordre de cadrage pour agencer ladite série d'éléments structurels en une répartition prédéterminée à des emplacements prédéterminés selon des cadrages prédéterminés.

6. Système de conception assistée par ordinateur comprenant:
6.1 au moins une interface d'entrée (30, 31) d'utilisateur, de préférence un clavier et/ou un tablette à graphiques;
6.2 au moins une interface de sortie d'utilisateur, de préférence un écran (31) à capacités graphiques et/ou un traceur (40);
6.3 un processeur numérique (34, 35) qui est relié à ladite interface d'entrée (30, 31) d'utilisateur et auxdites interfaces de sortie (39, 40) d'utilisateur et à une mémoire de programme contenant des instructions pour mettre en oeuvre ledit processeur numérique (34, 35);
6.4 ladite interface d'entrée (30, 31) d'utilisateur comprenant un ensemble de moyens d'entrée d'ordres de configuration, de préférence des touches de ladite tablette de graphiques,
caractérisé en ce que
6.5 ledit ensemble de moyen d'entrée d'ordres de configuration est divisé logiquement en au moins deux sous-groupes;
6.5.1 chaque ordre du premier sous-groupe étant associé à une particularité de configuration primaire;
6.5.2 chaque ordre du deuxième sous-groupe étant associé à une particularité de réplication;
6.6 ladite mémoire de programme contient des instructions
6.6.1 pour choisir un sous-groupe d'éléments géométriques, ou d'ordres de configuration les concernant, correspondant à un élément structurel dudit modèle;
6.6.2 pour répliquer lesdits éléments géométriques, ou lesdits ordres de configuration les concernant, dans un premier mode variable, dans lequel le nombre de réplication à exécuter et/ou leurs emplacements sont définis comme variables; et
6.6.3 pour engendrer dans un deuxième mode, un mode qui est pourvu d'une série prédéterminée desdits éléments structurels répliqués où lesdites variables sont remplacées par des valeurs réelles.
